# EUROPÄISCHE PATENTSCHRIFT

(11) **EP 0 885 911 B1**
(45) Veröffentlichungstag und Bekanntmachung des Hinweises auf die Patenterteilung: **18.06.2003**
(21) Anmeldenummer: 98810442.8
(22) Anmeldetag: 14.05.1998
(51) Int. Cl.: C08G 61/08, C08F 32/00

(54) **2-Komponenten-Katalysator für ROMP**
Two-component catalyst for ring-opening metathesis polymerization
Catalyseur à deux composants pour la polymérisation par métathèse par ouverture de cycle

(30) Priorität: 23.05.1997 CH 120497
(43) Veröffentlichungstag der Anmeldung: 23.12.1998
(73) Patentinhaber: Ciba Specialty Chemicals Holding Inc., 4057 Basel (CH)
(72) Erfinder: Hafner, Andreas, 3177 Laupen (CH); Van der Schaaf, Paul Adriaan, 1700 Fribourg (CH); Mühlebach, Andreas, 1782 Belfaux (CH)

(56) Entgegenhaltungen:
- EP-A- 0 376 198
- WO-A-96/20235
- WO-A-97/20865

## Beschreibung

Die vorliegende Erfindung betrifft ein 2-Komponenten-Katalysatorsystem für die ringöffnende Metathesepolymerisation (ROMP), ein härtbares System enthaltend ein solches Katalysatorsystem, ein Verfahren zur Herstellung von Formkörpern sowie die Verwendung des härtbaren Systems als Umhüllungsmaterial für elektrische oder elektronische Bauteile.

Im US-Patent 4,426,502 und in der EP-A-348 852 wird die ringöffnende Metathese-Polymerisation (ROMP) von gespannten Cycloolefinen mittels des RIM-Prozesses (reaction injection molding) beschrieben. Dabei wird ein Zwei-Komponenten-System aus einem Katalysator und einem Cokatalysator für die ringöffnende Metathese-Polymerisation verwendet. Das polymerisierbare Cycloolefin wird nach dem dort beschriebenen Verfahren in zwei Portionen geteilt, wobei die eine Hälfte den Katalysator und die andere Hälfte den entsprechenden Cokatalysator enthält. Beim Vermischen der beiden Portionen und Einspritzen in die vorgewärmte Form härtet das Gemisch dann schnell aus. Die Verwendung von Organoaluminium-Verbindungen als Co-Katalysatoren erfordert allerdings den Ausschluss von Feuchtigkeit.

In der WO 96/16100 und der WO 96/20235 werden feuchtigkeitsunempfindliche Ruthenium-Katalysatoren beschrieben, die sich aufgrund ihrer hohen Reaktivität jedoch nicht für das RIM-Verfahren eignen.

Aufgabe der vorliegenden Erfindung war es, ein gegen Luft und Feuchtigkeit stabiles 2-Komponenten-Katalysatorsystem für die ringöffnende Metathesepolymerisation mit ausreichender Reaktivität für den RIM-Prozess bereitzustellen.

Es wurde nun gefunden, dass bestimmte Ruthenium-Komplexe und tertiäre Phosphine mit sekundären Alkyl- oder Cycloalkylgruppen ein geeignetes lagerstabiles 2-Komponenten-System bilden, welches gehärtete Produkte mit ausgezeichneten Eigenschaften, insbesondere hoher Wärmestabilität, hoher Zähigkeit und mechanischer Festigkeit, liefert.

Gegenstand der vorliegenden Anmeldung ist somit ein Katalysatorsystem für die ringöffnende Metathesepolymerisation bestehend aus mindestens zwei Komponenten (a) und (b), wobei
(a) eine Ruthenium-Verbindung der Formel I oder II ist

   RuX₂(L₁)ₘ(L₂)ₙ(L₃)ₒ(L₄)ₚ (I),

   ARuX₂(L₁)ᵣ(L₂)ₛ (II),

   worin L₁, L₂, L₃ und L₄ unabhängig voneinander ein C₁-C₁₈-Alkylcyanid, ein C₆-C₂₄-Aralkylcyanid, ein tertiäres Amin, ein tertiäres Phosphin, welches keine an das Phosphoratom gebundenen sekundären Alkyl- oder Cycloalkylreste enthält, oder ein Phosphit darstellen, X für Halogen steht, A ein Aren bedeutet, m, n, o und p ganze Zahlen von 0 bis 4 darstellen, wobei gilt 2 ≤ m + n + o + p ≤ 4, r und s ganze Zahlen von 0 bis 2 darstellen, wobei gilt 1 ≤ r + s ≤ 2, und
(b) ein tertiäres Phosphin mit mindestens einem am Phosphoratom gebundenen sekundären Alkyl- oder Cycloalkylrest darstellt.

Die Ruthenium-Verbindungen der Formeln I oder II können nach bekannten Verfahren durch Umsetzung von Rutheniumdihalogeniden mit den entsprechenden Arenen, Nitrilen, Aminen, Phosphinen oder Phosphiten hergestellt werden.

Als Liganden L₁ bis L₄ geeignete C₁-C₁₈-Alkylcyanide sind beispielsweise Acetonitril, Propionitril, n-Butyronitril, Isobutyronitril, Pivalonitril, neo-Pentylcyanid, Valeronitril, Capronitril, n-Heptylcyanid, n-Octylcyanid, n-Nonylcyanid und n-Decylcyanid. Beispiele für geeignete C₆-C₂₄-Aralkylcyanide sind Phenylacetonitril, 3-Phenylpropionitril, 4-Phenylbutyronitril und Naphthylacetonitril.

Tertiäre Amine als Liganden L₁ bis L₄ sind zum Beispiel Trimethylamin, Triethylamin, Tri-npropylamin, Triisopropylamin, Tri-n-butylamin, Triisobutylamin, Tri-tert.-butylamin, Benzyldimethylamin, Triphenylamin, Tricyclohexylamin, Phenyldimethylamin, Phenyldiethylamin, Cyclohexyldimethylamin, Cyclohexyldiethylamin, Urotropin, Triethylendiamin, N-Methylpiperidin und N-Ethylpiperidin.

L₁ bis L₄ als tertiäres Phosphin kann beispielsweise Trimethylphosphin, Triethylphosphin, Trin-propylphosphin, Tri-n-butylphosphin, Triphenylphosphin, Methyldiphenylphosphin, Dimethylphenylphosphin, Tri-n-octylphosphin, Tritolylphosphin oder eine Verbindung der Formel lll sein 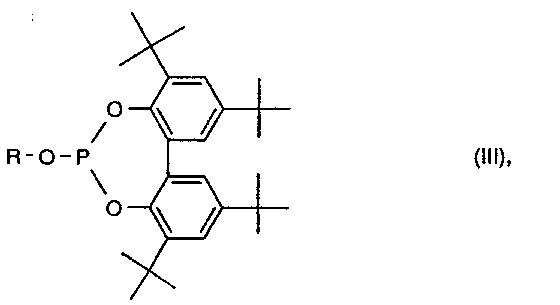 worin R für C₁-C₁₈-Alkyl, C₅-C₁₄-Aryl oder C₆-C₂₄-Aralkyl steht.
In der Formel lll können die Alkylgruppen geradkettig oder verzweigt sein und enthalten bevorzugt 1 bis 12, besonders bevorzugt 1 bis 8 und insbesondere bevorzugt 1 bis 4 C-Atome.
Alkyl umfaßt beispielsweise Methyl, Ethyl, Isopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.
R als Aryl enthält bevorzugt 6 bis 10 C-Atome. Es kann sich beispielsweise um Phenyl, Tolyl, Pentalinyl, Indenyl, Naphtyl, Azulinyl und Anthryl handeln.
R als Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl und α,α-Dimethylbenzyl handeln.

Geeignete Phosphite als Liganden L₁ bis L₄ sind beispielsweise Trimethylphosphit, Triethylphosphit, Tri-n-propylphosphit, Triisopropylphosphit, Tri-n-butylphosphit, Triphenylphosphit, Methyldiphenylphosphit, Dimethylphenylphosphit, Tri-n-octylphosphit, Tritolylphosphit oder Tris(p-nonylphenyl)phosphit oder Verbindungen der oben angegebenen Formel III.

X steht in den Formeln I oder II für Fluor, Chlor, Brom oder lod, insbesondere für Chlor.

Der Begriff "Aren" steht ganz allgemein für aromatische Verbindungen. In den Formeln II und lll steht A vorzugsweise für unsubstituierte oder mit OH, C₁-C₄-Alkyl, C₁-C₄-Alkoxy, C₆-C₁₂-Aryl oder Halogen substituierte monocyclische, polycyclische oder kondensierte Arene mit 6 bis 24, bevorzugt 6 bis 18 und besonders bevorzugt 6 bis 12 C-Atomen.

Einige Beispiele für Arene und Heteroarene sind Benzol, Toluol, o-Xylol, p-Xylol, Mesitylen, Ethylbenzol, Cumol, 1,3,5-Triisopropylbenzol, p-Cymol, Durol, Hexamethylbenzol, Naphthalin, Biphenyl, Diphenylmethan, Anthracen, Acenaphthen, Fluoren, Phenanthren, Pyren, Chrysen, Fluoranthren, Furan, Thiophen, Pyrrol, Pyridin, γ-Pyran, γ-Thiopyran, Pyrimidin, Pyrazin, Indol, Cumaron, Thionaphthen, Carbazol, Dibenzofuran, Benzthiophen, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren und Purin. Bevorzugte Arene und Heteroarene sind unsubstituiertes oder substituiertes Benzol, Naphthalin, Thiophen und Benzthiophen.

Als Komponente (b) des erfindungsgemäßen Katalysatorsystems eignen sich im Prinzip alle tertiären Phosphine, die mindestens eine direkt an das Phosphoratom gebundene sekundäre Alkyl- oder Cycloalkylgruppe aufweisen.
Als Beispiele für solche Phosphine seien Isopropyldimethylphosphin, Diisopropylmethylphosphin, lsopropyldiethylphosphin, Diisopropylethylphosphin, lsopropyldiphenylphosphin, Diisopropylphenylphosphin, Triisopropylphosphin, Tri-secbutylphosphin, Tris(1-Methylbutyl)phosphin, Tris(1-Ethylbutyl)phosphin, Cyclohexyldimethylphosphin, Dicyclohexylmethylphosphin und Tricyclohexylphosphin genannt.

In einer bevorzugten Ausführungsform der Erfindung ist Komponente (a) eine Verbindung der Formel II, worin A für Benzol, Toluol, o-Xylol, p-Xylol, Mesitylen, Ethylbenzol, Cumol, 1,3,5-Triisopropylbenzol, p-Cymol, Durol, Hexamethylbenzol, Naphthalin, Biphenyl oder Diphenylmethan steht.

Weiterhin bevorzugt als Komponente (a) ist eine Verbindung der Formel I oder II, worin ein oder mehrere Liganden L₁ bis L₄ Acetonitril, Propionitril, n-Butyronitril, Valeronitril oder Capronitril sind.

Bevorzugt als Komponente (a) sind ausserdem Verbindungen der Formel I oder II, worin ein oder mehrere Liganden L₁ bis L₄ Triphenylphosphin, Methyldiphenylphosphin, Dimethylphenylphosphin, Tri(n-butyl)phosphin, Tri(n-octyl)phosphin, Trimethylphosphit, Triisopropylphosphit, Triphenylphosphit, Tris(p-nonylphenyl)phosphit oder eine Verbindung der Formel lll sind 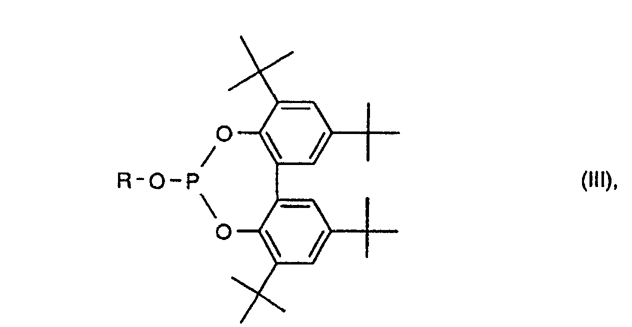 worin R für C₁-C₁₈-Alkyl, C₅-C₁₄-Aryl oder C₆-C₂₄-Aralkyl steht.

Besonders bevorzugt als Komponente (a) ist eine Verbindung der Formel II, worin A für p-Cymol, r für 2 und L₁ für Butyronitril oder Capronitril steht.

Insbesondere bevorzugt als Komponente (a) ist weiterhin eine Verbindung der Formel II, worin A für p-Cymol, r für 1, s für 0 und L₁ für Triphenylphosphit, Tris(p-nonylphenyl)phosphit oder 2,4,8,10-Tetrakis(1,1-dimethylethyl)-6-methoxy-dibenzo[d,f][1,3,2]dioxaphosphepin steht.

Als Komponente (b) wird vorzugsweise Triisopropylphosphin oder Tricyclohexylphosphin verwendet.

Beide Komponenten (a) und (b) sind nicht reaktiv gegenüber gespannten Cycloolefinen, d.h. Mischungen enthaltend ein Cycloolefin und Komponente (a) bzw. ein Cycloolefin und Komponente (b) sind bei Raumtemperatur über mehrere Monate lagerstabil. Erst beim Mischen der beiden Komponenten entsteht ein Produkt, das als Katalysator für die ringöffnende Metathesepolymerisation wirkt. Das erfindungsgemäße Zwei-Komponenten-System eignet sich daher besonders für das RIM-Verfahren, da das polymerisierbare Cycloolefin vor der Verarbeitung in zwei Portionen geteilt werden kann, die mit den entsprechenden Mengen der Komponenten (a) und (b) versetzt werden. Beim Vermischen der beiden Portionen und Einspritzen in die vorgewärmte Form polymersisiert das Gemisch dann sehr rasch und bildet gehärtete Produkte mit guten mechanischen Eigenschaften.

Gegenstand der vorliegenden Erfindung ist daher auch ein härtbares 2-Komponenten-System bestehend aus mindestens zwei Komponenten (c) und (d), wobei
(c) eine Mischung aus 90,0-99,999 Gew.-%, vorzugsweise 95,0- 99,9 Gew.-%, insbesondere 98,0-99,6 Gew.-%, eines gespannten Cycloolefins und 0,001-10,0 Gew.-%, vorzugsweise 0,1- 5,0 Gew.-%, insbesondere 0,4- 2,0 Gew.-%, der oben angegebenen Komponente (a) ist, und
(d) eine Mischung aus 90,0-99,999 Gew.-%, vorzugsweise 95,0- 99,9 Gew.-%, insbesondere 98,0-99,6 Gew.-%, eines gespannten Cycloolefins und 0,001-10,0 Gew.-%, vorzugsweise 0,1- 5,0 Gew.-%, insbesondere 0,4- 2,0 Gew.-%, der oben angegebenen Komponente (b) ist.

Unter gespannten Cycloolefinen sind im Rahmen der vorliegenden Erfindung alle Cycloolefine mit Ausnahme des Cyclohexens und seiner Derivate, die nicht mit der ringöffnenden Metathese polymerisiert werden können, zu verstehen.

Bei den gespannten Cycloolefinen kann es sich um monocyclische oder polycyclische kondensierte bzw. überbrückte Ringsysteme, zum Beispiel mit zwei bis vier Ringen, handeln, die unsubstituiert oder substituiert sind und ein oder mehrere Heteroatome, wie zum Beispiel O, S, N oder Si, in einem oder mehreren Ringen und/oder kondensierte aromatische oder heteroaromatische Ringe, wie zum Beispiel o-Phenylen, o-Naphthylen, o-Pyridinylen oder o-Pyrimidinylen, enthalten können. Die einzelnen cyclischen Ringe können 3 bis 16, bevorzugt 3 bis 12 und besonders bevorzugt 3 bis 8 Ringglieder enthalten. Die gespannten Cycloolefine können weitere nichtaromatische Doppelbindungen enthalten, je nach Ringgrösse bevorzugt 2 bis 4 solcher zusätzlicher Doppelbindungen.

Wenn die gespannten Cycloolefine mehr als eine Doppelbindung enthalten, zum Beispiel 2 bis 4 Doppelbindungen, können sich abhängig von den Reaktionsbedingungen, dem gewählten Monomer und der Katalysatormenge, auch vemetzte Polymerisate bilden.

Bevorzugte Cycloolefine sind Diels-Alder-Addukte von Cyclopentadien.

Geeignete Diels-Alder-Addukte von Cyclopentadien sind beispielsweise die folgenden Verbindungen:

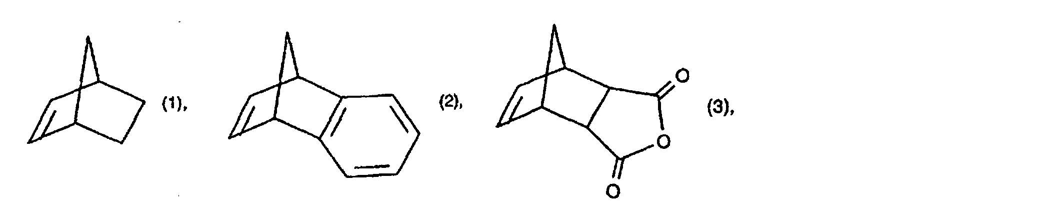

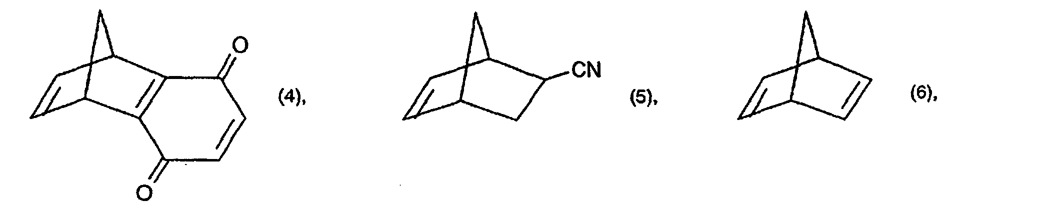

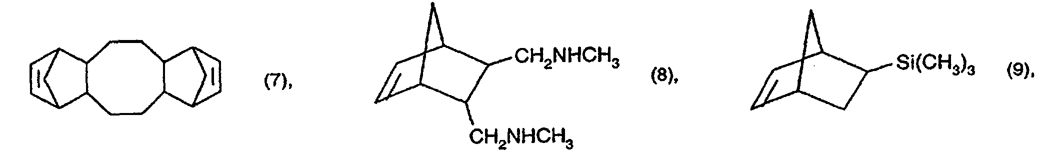

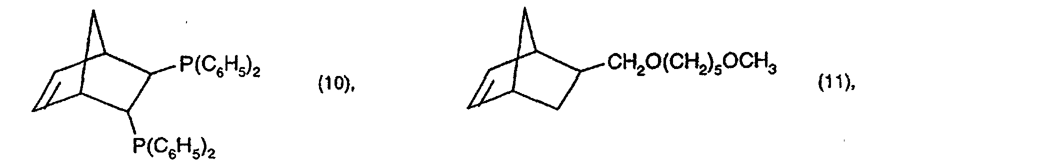

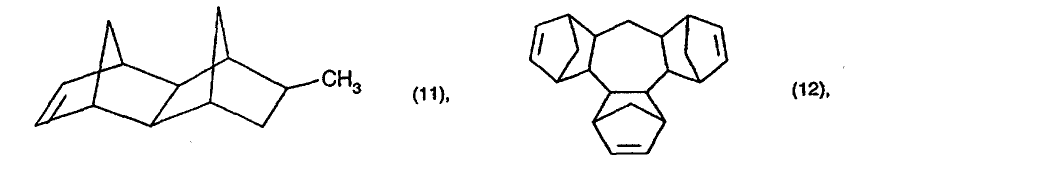

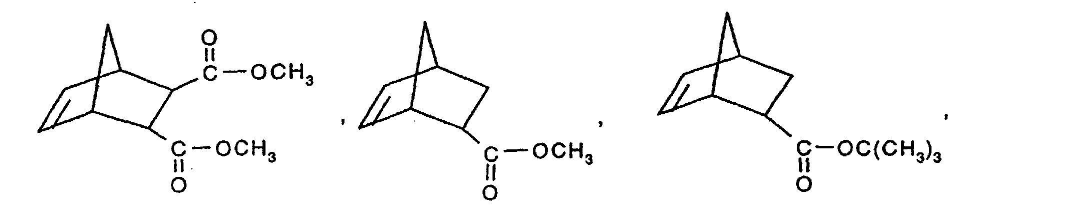

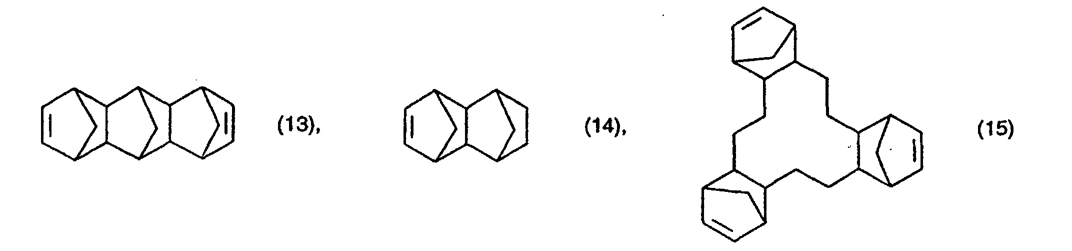

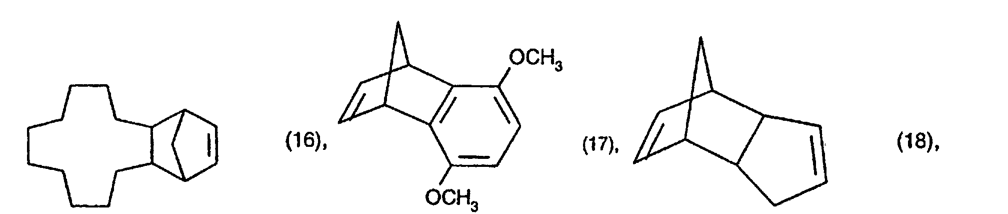

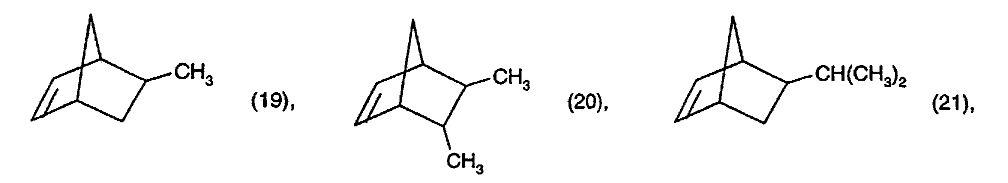

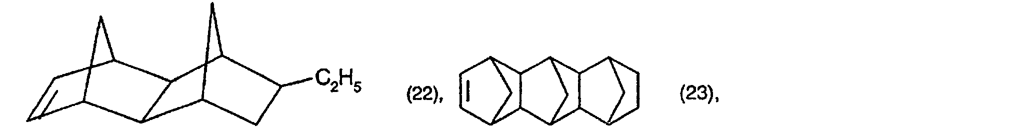

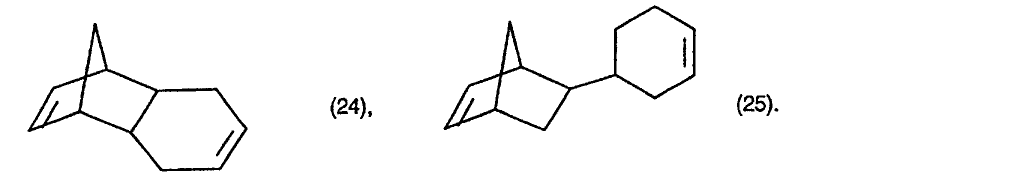

Bevorzugte Diels-Alder-Addukte sind Norbornen (1), Norbomadien (6), Cyclohexenylnorbornen (25), Tetracyclododecen (14), Methyltetracyclododecen (11) und insbesondere Dicyclopentadien (18).

Die gewünschte Viskosität des härtbaren Gemisches kann durch Zusatz von thermoplastischen Materialien eingestellt werden. Beispiele für geeignete Thermoplasten sind Polystyrol, Polynorbornen (z.B. Norsorex® NS der Fa. Nippon Zeon), hydrierte Polynorbornenderivate (z.B. Zeonex® der Fa. Nippon Zeon), Polycycloocten (z.B. Vestenamer® der Fa. Hüls) und Polybutadien.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere.
Geeignete Zähigkeitsvermittler sind beispielsweise in der EP-A-449 776 beschrieben.

Zur Verbesserung der elektrischen Eigenschaften (Dielektrizitätskonstante, Verlustfaktor) können den härtbaren Mischungen Silane, wie z.B. die von der Fa. Osi Specialties unter der Bezeichnung Silquest® Silan angebotenen Verbindungen, zugesetzt werden. Geeignete Silane sind beispielsweise Octyltriethoxysilan, Methyltriethoxysilan, Vinyltriethoxysilan, Methyltrimethoxysilan, Vinyltrimethoxysilan, γ-Aminopropyltrimethoxysilan und γ-Glycidyloxypropyltrimethoxysilan.

Neben den oben erwähnten Additiven können die erfindungsgemäßen Zusammensetzungen weitere übliche Zusatzstoffe enthalten, wie z.B. Antioxidantien, Lichtschutzmittel, Weichmacher, Farbstoffe, Füllstoffe, Pigmente, Thixotropiemittel, Entschäumer, Antistatika, Gleitmittel und Entformungshilfsmittel.

Zur Steigerung der katalytischen Aktivität kann der Komponente (b) eine geringe Menge eines Alkins, wie beispielsweise 1-Heptin, 1-Octin, 1-Decin oder Phenylethin, zugesetzt werden.

Einen weiteren Erfindungsgegenstand bildet ein Verfahren zur Herstellung eines Metathesepolymerisats, dadurch gekennzeichnet, dass eine Zusammensetzung enthaltend die Komponenten (c) und (d) auf eine Temperatur >40 °C erwärmt wird.

Zweckmässig wird das erfindungsgemäße Verfahren bei einer Temperatur von mindestens 60°C durchgeführt. Insbesondere wird das erfindungsgemäße Verfahren bei Temperaturen von 60 bis 300 °C, besonders bevorzugt bei 60 bis bis 200 °C und insbesondere bevorzugt bei 70 bis 160 °C, durchgeführt. Nach der Polymerisation kann es vorteilhaft sein, das Gemisch bei erhöhten Temperaturen, zum Beispiel 80 bis 200 °C, nachzutempern.

Die nach dem erfindungsgemäßen Verfahren hergestellten Metathese-Polymerisate können Homopolymere, Copolymere mit statistischer Verteilung der Struktureinheiten, Pfropfpolymere, Blockpolymere oder vemetzte Polymere sein. Die Polymere können ein mittleres Molekulargewicht von 500 bis zu 2'000'000 Dalton, vorzugsweise 1000 bis 1'000'000 Dalton (bestimmt mittels Gelpermeationschromatographie) aufweisen.

Die nach dem erfindungsgemäßen Verfahren hergestellten Polymerisate zeichnen sich vor allem durch eine hohe Wärmestabilität, hohe Zähigkeit und mechanische Festigkeit sowie durch hervorragende elektrische Eigenschaften (niedrige Dielektrizitätskonstante, niedriger Verlustfaktor bzw. tanδ-Wert) aus und eignen sich für Anwendungen in der Vakuum-Gießtechnologie, als Gießharze, lmprägnierharze und insbesondere als Umhüllungsmaterial für elektrische und elektronische Bauteile.

Einen weiteren Erfindungsgegenstand bildet ein Verfahren zur Herstellung von Formkörpern, dadurch gekennzeichnet, dass ein härtbares 2-Komponenten-System enthaltend die oben angegebenen Komponenten (c) und (d) nach dem RIM-Verfahren in eine Form eingebracht und gehärtet wird.

Die Verwendung eines härtbaren 2-Komponenten-Systems enthaltend die oben angegebenen Komponenten (c) und (d) als Umhüllungsmaterial für elektrische oder elektronische Bauteile stellt einen weiteren Erfindungsgegenstand dar.

### Beispiele:

Das in den nachfolgenden Beispielen verwendete Dicyclopentadien wird ca. 15 Minuten bei Raumtemperatur unter Vakuum (3 mbar) entgast und anschließend unter Stickstoff aufbewahrt.
[(p-Cymol)RuCl₂{2,4,8,10-tetrakis(1,1-dimethylethyl)-6-methoxy-dibenzo[d,f][1,3,2]dioxaphosphepin}], [(p-Cymol)RuCl₂(Triphenylphosphit)] und [(p-Cymol)RuCl₂{Tris(pnonylphenyl)phosphit}] werden hergestellt durch Zugabe von einem Äquivalent des entsprechenden Phosphits zu einer Lösung von [(p-Cymol)RuCl₂]₂ in Methylenchlorid. Die reinen Produkte werden durch Abdestillieren des Lösungsmittels und anschließendes Waschen mit Hexan in nahezu quantitativer Ausbeute isoliert.

Folgende Abkürzungen werden verwendet:
- DCPD:: Dicyclopentadien (wenn nicht anders angegeben: 97 % Fa. BF Goodrich)
- DSC:: Differential Scanning Calorimetry
- TGA: Thermogravimetrische Analyse
- T_{g}:: Glasübergangstemperatur (gemessen mittels DSC, Aufheizrate: 10 °C/min)

### Beispiel 1

Eine Lösung von 25mg [(p-Cymol)RuCl₂]₂ und 13µl Butyronitril in 5 ml DCPD wird 30 min bei 80°C gerührt. Die so hergestellte Lösung von [(p-Cymol)RuCl₂(Butyronitril)₂] wird mit 2,9 ml einer Lösung von Tricyclohexylphosphin in DCPD (1 Gew.%) versetzt und anschließend ausgehärtet (16 h/80 °C; 2 h/ 120 °C). Dabei wird ein gelbes, festes Polymer (T_{g} = 33 °C) erhalten.

### Beispiel 2

Eine Lösung von 25mg [(p-Cymol)RuCl₂]₂ und 20µl Capronitril in 5 ml DCPD wird 30 min bei 80°C gerührt. Die so hergestellte Lösung von [(p-Cymol)RuCl₂(Capronitril)₂] wird mit 2,9 ml einer Lösung von Tricyclohexylphosphin in DCPD (1 Gew.%) versetzt und anschließend ausgehärtet (16 h/80°C; 2 h/ 120°C). Dabei wird ein gelbes, festes Polymer (T_{g} = 40 °C) erhalten.

### Beispiel 3

Eine Lösung von 61 mg [(*p*-Cymol)RuCl₂{2,4,6,10-tetrakis(1,1-dimethylethyl)-6-methoxydibenzo[d,f][1,3,2]dioxaphosphepin}] in 5 ml DCPD wird mit 2,9 ml einer Lösung von Tricyclohexylphosphin in DCPD (1 Gew.%) versetzt und anschließend ausgehärtet (16 h/80 °C; 3,5 h/120 °C). Dabei wird ein grünlich-braunes, festes Polymer (T_{g} = 31 °C) erhalten.

### Beispiel 4

Eine Lösung von 31 mg [(p-Cymol)RuCl₂(Triphenylphosphit)] in 5 ml DCPD wird mit 14 mg Tricyclohexylphosphin und 7 µl Phenylacetylen versetzt und anschließend ausgehärtet (55 h/80 °C; 2 h/ 120 °C). Dabei wird ein braunes, festes Polymer (T_{g} = 103 °C) erhalten.

### Beispiel 5

Eine Lösung von 31 mg [(p-Cymol)RuCl₂(Triphenylphosphit)] in 5 ml DCPD wird mit 14 mg Tricyclohexylphosphin und 5 µl Phenylacetylen versetzt und anschließend ausgehärtet (55 h/80 °C; 2 h/ 120 °C). Dabei wird ein braunes, festes Polymer (T_{g} = 103 °C) erhalten.

### Beispiel 6

Eine Lösung von 31 mg [(p-Cymol]RuCl₂(Triphenylphosphit]] in 5 ml DCPD wird mit 14 mg Tricyclohexylphosphin und 5 µl Phenylacetylen versetzt und anschließend ausgehärtet (1,5 h/100 °C; 2,5 h/ 120 °C; 15 h/150 °C). Dabei wird ein hartes, gelbes Polymer (T_{g} = 146 °C) erhalten.

### Beispiel 7

Eine Lösung von 31 mg [(p-Cymol)RuCl₂(Triphenylphosphit)] in 5 ml DCPD wird mit 14 mg Tricyclohexylphosphin und 5 µl Phenylacetylen versetzt und anschließend ausgehärtet (1,5 h/80 °C; 2,5 h/ 100 °C; 15 h/120 °C). Dabei wird ein hartes, braunes Polymer (T_{g} = 146 °C) erhalten.

### Beispiel 8

Eine Lösung von 50 mg [(p-Cymol)RuCl₂{tris(p-nonylphenyl)phosphit}] in 5 ml DCPD wird mit 14 mg Tricyclohexylphosphin und 5 µl Phenylacetylen versetzt und anschließend ausgehärtet (2 h/80 °C; 2 h/ 120 °C; 14 h/140 °C). Dabei wird ein hartes, braunes Polymer (T_{g} = 95 °C) erhalten.

### Beispiel 9

Eine Lösung von 50 mg [(p-Cymol)RuCl₂{tris(p-nonylphenyl)phosphit}] in 5 ml DCPD (94 %, Fa. Shell) wird mit 14 mg Tricyclohexylphosphin versetzt und anschließend ausgehärtet (2 h/80 °C; 2 h/ 120 °C; 10 h/140 °C). Dabei wird ein hartes Polymer (T_{g} = 128 °C) erhalten.

### Beispiel 10

Eine Lösung von 150 mg [(p-Cymol)RuCl₂{tris(p-nonylphenyl)phosphit)] in 10 ml DCPD (94 %, Fa. Shell) wird mit einer Lösung von 40 mg Tricyclohexylphosphin in 5 ml DCPD (94 %, Fa. Shell) versetzt und anschließend ausgehärtet (2 h/80 °C; 2 h/ 120 °C; 10 h/140 °C). Dabei wird ein hartes Polymer (T_{g} = 132 °C) erhalten.

### Beispiel 11

Eine Lösung von 150 mg [(p-Cymol)RuCl₂{tris(p-nonylphenyl)phosphit}] in 10 ml DCPD (94 %, Fa. Shell) wird mit einer Lösung von 35 mg Tris(isopropyl)phosphin in 5 ml DCPD (94 %, Fa. Shell) versetzt und anschließend ausgehärtet (2 h/80 °C; 2 h/120 °C; 10 h/140 °C). Dabei wird ein hartes Polymer (T_{g} = 130 °C) erhalten.

## Patentansprüche

1. Katalysatorsystem für die ringöffnende Metathesepolymerisation bestehend aus mindestens zwei Komponenten (a) und (b), wobei
(a) eine Ruthenium-Verbindung der Formel I oder II ist
RuX₂(L₁)ₘ(L₂)ₙ(L₃)ₒ(L₄)ₚ (I),
ARuX₂(L₁)ᵣ(L₂)ₛ (II),
worin L₁, L₂, L₃ und L₄ unabhängig voneinander ein C₁-C₁₈-Alkylcyanid, ein C₆-C₂₄-Aralkylcyanid, ein tertiäres Amin, ein tertiäres Phosphin, welches keine an das Phosphoratom gebundenen sekundären Alkyl- oder Cycloalkylreste enthält, oder ein Phosphit darstellen, X für Halogen steht, A ein Aren bedeutet, m, n, o und p ganze Zahlen von 0 bis 4 darstellen, wobei gilt 2 ≤ m + n + o + p ≤ 4, r und s ganze Zahlen von 0 bis 2 darstellen, wobei gilt 1 ≤ r + s ≤ 2, und
(b) ein tertiäres Phosphin mit mindestens einem am Phosphoratom gebundenen sekundären Alkyl- oder Cycloalkylrest darstellt.

2. Katalysatorsystem nach Anspruch 1, worin Komponente (a) eine Verbindung der Formel I oder II ist, worin X für Chlor steht.

3. Katalysatorsystem nach Anspruch 1, worin Komponente (a) eine Verbindung der Formel II ist, worin A für Benzol, Toluol, o-Xylol, p-Xylol, Mesitylen, Ethylbenzol, Cumol, 1,3,5-Triisopropylbenzol, p-Cymol, Durol, Hexamethylbenzol, Naphthalin, Biphenyl oder Diphenylmethan steht.

4. Katalysatorsystem nach Anspruch 1, worin Komponente (a) eine Verbindung der Formel I oder II ist, worin ein oder mehrere Liganden L₁ bis L₄ Acetonitril, Propionitril, n-Butyronitril, Valeronitril oder Capronitril sind.

5. Katalysatorsystem nach Anspruch 1, worin Komponente (a) eine Verbindung der Formel I oder II ist, worin ein oder mehrere Liganden L₁ bis L₄ Triphenylphosphin, Methyldiphenylphosphin, Dimethylphenylphosphin, Tri(n-butyl)phosphin, Tri(noctyl)phosphin, Trimethylphosphit, Triisopropylphosphit, Triphenylphosphit, Tris(p-nonylphenyl)phosphit oder eine Verbindung der Formel lll sind 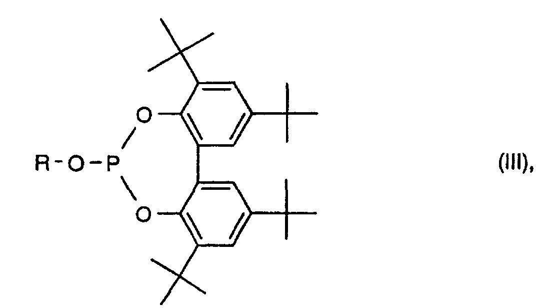 worin R für C₁-C₁₈-Alkyl, C₅-C₁₄-Aryl oder C₆-C₂₄-Aralkyl steht.

6. Katalysatorsystem nach Anspruch 1, worin Komponente (a) eine Verbindung der Formel II ist, worin A für p-Cymol, r für 2 und L₁ für Butyronitril oder Capronitril steht.

7. Katalysatorsystem nach Anspruch 1, worin Komponente (a) eine Verbindung der Formel II ist, worin A für p-Cymol, r für 1, s für 0 und L₁ für Triphenylphosphit, Tris(p-nonylphenyl)phosphit oder 2,4,8,10-Tetrakis(1,1-dimethylethyl)-6-methoxydibenzo[d,f][1,3,2]dioxaphosphepin steht.

8. Katalysatorsystem nach Anspruch 1, worin Komponente (b) Triisopropylphosphin oder Tricyclohexylphosphin ist.

9. Härtbares 2-Komponenten-System bestehend aus mindestens zwei Komponenten (c) und (d), wobei
(c) eine Mischung aus 90,0-99,999 Gew.-% eines gespannten Cycloolefins und 0,001-10,0 Gew.-% der Komponente (a) gemäß Anspruch 1 ist, und
(d) eine Mischung aus 90,0-99,999 Gew.-% eines gespannten Cycloolefins und 0,001-10,0 Gew.-% der Komponente (b) gemäß Anspruch 1 ist.

10. Härtbares System nach Anspruch 9 enthaltend ein Diels-Alder-Addukt von Cyclopentadien als gespanntes Cycloolefin.

11. Verfahren zur Herstellung eines Metathesepolymerisats, **dadurch gekennzeichnet, dass** ein härtbares 2-Komponenten-System nach Anspruch 9 auf eine Temperatur >40 °C erwärmt wird.

12. Verfahren zur Herstellung von Formkörpern, **dadurch gekennzeichnet, dass** ein härtbares 2-Komponenten-System nach Anspruch 9 nach dem RIM-Verfahren in eine Form eingebracht und gehärtet wird.

13. Verwendung eines härtbaren 2-Komponenten-Systems nach Anspruch 9 als Umhüllungsmaterial für elektrische oder elektronische Bauteile.

## Claims

1. A catalyst system for the ring-opening metathesis polymerisation, which consists of at least two components (a) and (b), wherein
(a) is a ruthenium compound of formula I or II
RuX₂(L₁)ₘ(L₂)ₙ(L₃)ₒ(L₄)ₚ (I),
ARuX₂(L₁)ᵣ(L₂)ₛ (II),
wherein L₁, L₂, L₃ and L₄ are each independently of the other C₁-C₁₈alkylcyanide, C₆-C₂₄aralkylcyanide, tertiary amine, tertiary phosphine which does not contain any secondary alkyl or cycloalkyl radicals bound to the phosphorus atom, or phosphite, X is halogen, A is arene, m, n, o and p are integers from 0 to 4, where 2 ≤ m + n + o + p ≤ 4, r and s are integers from 0 to 2, where 1 ≤ r + s ≤ 2, and
(b) is a tertiary phosphine containing at least one secondary alkyl radical or cycloalkyl radical bound to the phosphorus atom.

2. A catalyst system according to claim 1, wherein component (a) is a compound of formula I or II, wherein X is chloro.

3. A catalyst system according to claim 1, wherein component (a) is a compound of formula II, wherein A is benzene, toluene, o-xylene, p-xylene, mesitylene, ethylbenzene, cumene, 1,3,5-triisopropylbenzene, p-cymene, durene, hexamethylbenzene, naphthalene, biphenyl or diphenylmethane.

4. A catalyst system according to claim 1, wherein component (a) is a compound of formula I or II, wherein one or several ligands L₁ to L₄ are acetonitrile, propionitrile, n-butyronitrile, valeronitrile or capronitrile.

5. A catalyst system according to claim 1, wherein component (a) is a compound of formula I or II, wherein one or several ligands L₁ to L₄ are triphenylphosphine, methyldiphenylphosphine, dimethylphenylphosphine, tri(n-butyl)phosphine, tri(n-octyl)phosphine, trimethylphosphite, triisopropylphosphite, triphenylphosphite, tris(p-nonylphenyl)phosphite or a compound of formula III 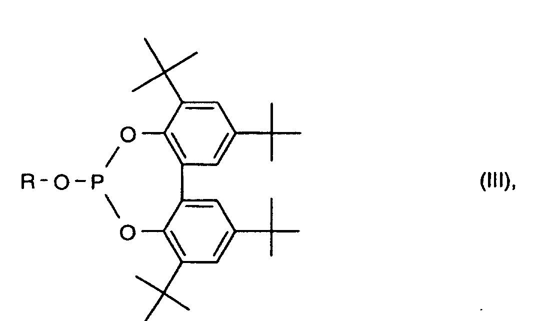 wherein R is C₁-C₁₈alkyl, C₅-C₁₄aryl or C₆-C₂₄aralkyl.

6. A catalyst system according to claim 1, wherein component (a) is a compound of formula II, wherein A is p-cymene, r is 2, and L₁ is butyronitrile or capronitrile.

7. A catalyst system according to claim 1, wherein component (a) is a compound of formula II, wherein A is p-cymene, r is 1, s is 0, and L₁ is triphenylphosphite, tris(p-nonylphenyl)-phosphite or 2,4,8,10-tetrakis(1,1-dimethylethyl)-6-methoxydibenzo[d,f][1,3,2]dioxaphosphepine.

8. A catalyst system according to claim 1, wherein component (b) is triisopropylphosphine or tricyclohexylphosphine.

9. A curable two-component system, which consists of at least two components (c) and (d), wherein
(c) is a mixture of 90.0-99.999 % by weight of a strained cycloolefin and of 0.001-10.0 % by weight of the component (a) according to claim 1, and
(d) is a mixture of 90.0-99.999 % by weight of a strained cycloolefin and of 0.001-10.0 % by weight of the component (b) according to claim 1.

10. A curable system according to claim 9, wherein the strained cycloolefin is a Diels-Alder adduct of cyclopentadiene.

11. A process for the preparation of a metathesis polymer, which comprises heating a curable two-component system as claimed in claim 9 to a temperature of >40 °C.

12. A process for the preparation of moulded articles, which comprises introducing a curable two-component system as claimed in claim 9 into a mould by the RIM process and curing it.

13. Use of a curable two-component system as claimed in claim 9 as encapsulating material for electrical or electronic components.

## Revendications

1. Système catalytique pour la polymérisation par métathèse décyclisante constituté par au moins deux composants (a) et (b),
(a) un composé de ruthénium de formule I ou II
RuX₂(L₁)ₘ(L₂)ₙ(L₃)ₒ(L₄)ₚ (I),
ARuX₂(L₁)ᵣ(L₂)ₛ (II),
où L₁, L₂, L₃ et L₄ représentent, indépendamment l'un de l'autre, un cyanure d'alkyle en C₁-C₁₈, un cyanure d'aralkyle en C₆-C₂₄, une amine tertiaire, une phosphine tertiaire, qui ne présente pas de restes alkyle ou cycloalkyle lié à l'atome de phosphore, ou un phosphite, X représente un atome d'halogène, A représente un arène, m, n, o et p sont des entiers de 0 à 4, où s'applique 2 ≤ m + n + o + p ≤ 4, r et s sont des entiers de 0 à 2, où s'applique 1 ≤ r + s ≤ 2, et
(b) une phosphine tertiaire avec au moins un reste alkyle ou cycloalkyle secondaire lié à l'atome de phosphore.

2. Système catalytique selon la revendication 1, où le composant (a) est un composé de formule I ou II, où X représente un atome de chlore.

3. Système catalytique selon la revendication 1, où le composant (a) est un composé de formule II , où A représente benzène, toluène, o-xylène, p-xylène, mésitylène, éthylbenzène, cumol, 1,3,5-triisopropylbenzène, p-cymol, durol, hexaméthyl-benzène, naphtalène, biphényle ou diphénylméthane.

4. Système catalytique selon la revendication 1, où le composant (a) est un composé de formule I ou II, dans lequel un ou plusieurs ligands L₁ à L₄ sont l'acétonitrile, le propionitrile, le n-butyronitrilè, le valéronitrile ou le capronitrile.

5. Système catalytique selon la revendication 1, où le composant (a) est un composé de formule I ou II, dans lequel un ou plusieurs ligands L₁ à L₄ sont la triphénylphosphine, la méthyl-diphénylphosphine, la diméthylphénylphosphine, la tri-(n-butyl)phosphine, la tri(n-octyl)phosphine, le phosphite de triméthyle, le phosphite de triisopropyle, le phosphite de triphényle, le phosphite de tris-(p-nonylphényle) ou un composé de formule III 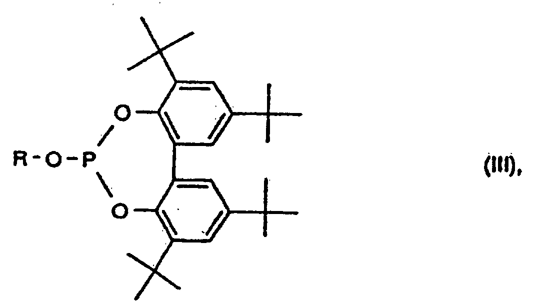 où R représente un groupe alkyle en C₁-C₁₈, aryle en C₅-C₁₄ ou aralkyle en C₆-C₂₄.

6. Système catalytique selon la revendication 1, où le composant (a) représente un composé de formule II, A représente p-cymol, r vaut 2 et L₁ représente butyronitrile ou capronitrile.

7. Système catalytique selon la revendication 1, où le composant (a) représente un composé de formule II, où A représente p-cymol, r vaut 1, s vaut 0 et L₁ représente le phosphite de triphényle, le phosphite de tris(p-nonylphényle) ou la 2,4,8,10-tétrakis(1,1-diméthyléthyl)-6-méthoxy-dibenzo[d,f]-[1,3,2]-dioxaphosphépine.

8. Système catalytique selon la revendication 1, où le composant (a) est la phosphine de triisopropyle ou la phosphine de tricyclohexyle.

9. Système à deux composants durcissable constitué par au moins deux composants (c) et (d),
(c) étant un mélange de 90,0 à 99,999 % en poids d'une cyclooléfine tendue et de 0,001 à 10,0 % en poids du composant (a) selon la revendication 1, et
(d) un mélange de 90,0 à 99,999 % en poids d'une cyclooléfine tendue et de 0,001 à 10,0 % en poids du composant (b) selon la revendication 1.

10. Système durcissable selon la revendication 9 renfermant un adduit de Diels-Alder du cyclopentadiène en tant que cyclooléfine tendue.

11. Procédé pour la préparation d'un polymère par métathèse, **caractérisé en ce qu'**on chauffe un système à deux composants durcissable selon la revendication 9 à une température >40°C.

12. Procédé pour la préparation de corps moulés, **caractérisé en ce qu'**on met en forme un système à deux composants durcissable selon la revendication 9 selon la procédé RIM et on le durcit.

13. Utilisation d'un système à deux composants durcissable selon la revendication 9 en tant que matériau d'enrobage de composants électriques ou électroniques.
